# FASCICULE DE BREVET EUROPEEN

(11) **EP 3 996 920 B1**
(45) Date de publication et mention de la délivrance du brevet: **15.10.2025**
(21) Numéro de dépôt: 19741987.2
(22) Date de dépôt: 08.07.2019
(51) Int. Cl.: B33Y 10/00, B29C 64/153, B29C 64/255, B29C 64/214, B29C 64/209, B22F 3/105

(54) **DISPOSITIF ET PROCÉDÉ DE DÉPOSE D'UN MATÉRIAU GRANULAIRE EN FABRICATION ADDITIVE**
VORRICHTUNG UND VERFAHREN ZUR ABSCHEIDUNG EINES KÖRNIGEN MATERIALS IN DER GENERATIVEN FERTIGUNG
DEVICE AND METHOD FOR DEPOSITING A GRANULAR MATERIAL IN ADDITIVE MANUFACTURE

(43) Date de publication de la demande: 18.05.2022
(73) Titulaire: Ecole Centrale De Nantes, 44321 Nantes (FR)
(72) Inventeur: HASCOËT, Jean-Yves, 44300 Nantes (FR); MOGNOL, Pascal, 35000 Rennes (FR); LE NÉEL, Tugdual, 44200 Nantes (FR)
(74) Mandataire: Ipside
(86) Numéro de dépôt international: PCT/EP2019/068308
(87) Numéro de publication internationale: WO 2020/011736

(56) Documents cités:
- WO-A1-2017/018935
- DE-U1- 202017 003 867

## Description

### Domaine technique

L'invention concerne un dispositif et un procédé pour la dépose d'un matériau granulaire pour la fabrication additive. L'invention est adaptée à la mise en œuvre d'un procédé de fabrication additive utilisant un frittage sélectif, une fusion sélective ou une projection sélective de liant sur un lit de matériau granulaire, le matériau granulaire étant une poudre polymère, une poudre métallique, un sable ou une poudre céramique.

Ces procédés de fabrication additive consistent dans leur principe à agglomérer sélectivement, par fusion, frittage ou projection d'un liant, les grains d'un matériau granulaire dans une couche d'épaisseur définie, déposée sur une couche de matériau granulaire ayant préalablement fait l'objet d'un même processus d'agglomération sélective. Le terme « agglomération » est ici considéré dans un sens large, les différents procédés considérés produisant des liaisons de natures très différentes entre les grains soumis à l'effet sélectif.

La partie sélectivement agglomérée de ladite couche se lie à la partie sélectivement agglomérée de la couche précédente, et la pièce objet du procédé de fabrication est ainsi fabriquée par strates successives. La pièce terminée est ensuite extraite du lit de matière granulaire.

Ces procédés nécessitent lors de chaque passe de fusion, frittage ou projection de liant sélectives, de déposer préalablement une couche de matériau granulaire d'épaisseur contrôlée sur le lit de matière.

### Technique antérieure

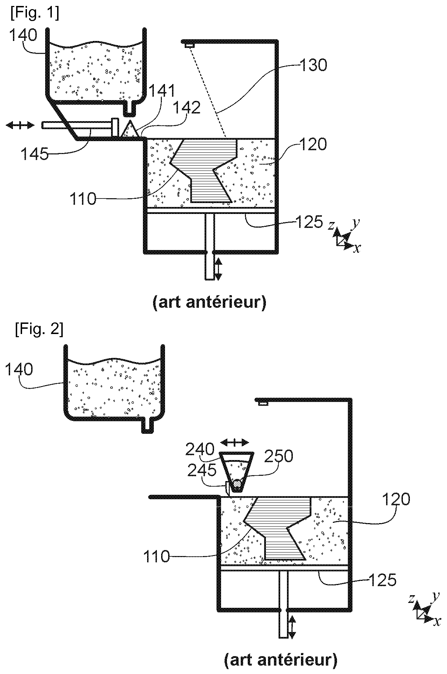

La figure 1 relative à l'art antérieur représente un exemple de mise en œuvre d'un tel procédé. La pièce (110) est réalisée par strates successives en agglomérant sélectivement les grains dans un lit de matériau granulaire (120). L'agglomération sélective est, par exemple, réalisée par frittage en exposant des zones dans une couche du lit de matériau granulaire à un rayonnement laser (130) dont le déplacement sur ledit lit (120) est piloté selon une trajectoire définie.

Le lit de matériau granulaire est posé sur un plateau (125) déplaçable verticalement au moyen d'un vérin piloté, par exemple un vérin à vis ou un moteur linéaire.

Initialement, le plateau (125) se trouve à hauteur de la table (142). Une trémie (140) contient une réserve de matériau granulaire.

Par des moyens non détaillés, un tas (141) de matière granulaire est dispensé par la trémie (140) sur la table (142).

Le plateau (125) descend de l'épaisseur de la couche à créer et un racleur (145) se déplace parallèlement à la surface du plateau (125) pour pousser le tas (141) de matière et le répartir selon une couche d'épaisseur uniforme sur ladite surface du plateau.

Les moyens d'agglomération (130) entrent en action et agglomèrent sélectivement une strate de la pièce dans la couche ainsi déposée.

Puis, le plateau (125) descend à nouveau d'une épaisseur de couche. La trémie (140) délivre un nouveau tas de matière qui est répartie sur la couche précédente par le racleur (145) et ainsi de suite, jusqu'à la réalisation complète de la pièce (110).

L'opération de dépôt de la couche de matériau granulaire selon ce procédé, ainsi que ses variantes, pose des difficultés pour l'obtention d'une couche d'épaisseur uniforme, particulièrement, mais non exclusivement, lorsque la surface du lit de matière est importante.

Le tas (141) de matière est initialement plus difficile à pousser et à répartir qu'à la fin de la répartition de sorte que la couche n'est pas directement d'épaisseur uniforme. Le racleur (145) égalise celle-ci lors de son retour, en contrepartie une quantité de matière supérieure à ce qui est nécessaire doit être déposée pour permettre cette égalisation.

Même si cette quantité de matière excédentaire est récupérable, il est nécessaire de prévoir les moyens pour cette récupération, ce qui complexifie la machine et en augmente le coût.

Cette méthode de dépose de la couche de matière n'est pas adaptée à une machine de fabrication additive utilisant une cinématique cylindrique. Le document US 2015/0306819 donne un exemple d'une telle machine. Un autre système de dépose d'une couche de matière est divulgué par le document DE 202017003867 U1.

Figure 2, selon un autre mode de réalisation de l'art antérieur la couche de matière est déposée par l'intermédiaire d'une trémie (240) mobile. Un racleur (245) est placé devant ou derrière ladite trémie.

Selon un exemple de réalisation, la trémie (240) comprend au voisinage de son ouverture inférieure un cylindre à encoches (250) entraîné en rotation par un moteur pas à pas (non représenté). Préalablement à la dépose de la couche, la trémie est remplie d'une quantité de matière nécessaire, égale ou légèrement supérieure à la quantité de matière requise pour la couche à déposer.

Ainsi, en contrôlant la rotation du cylindre à encoches (250) pendant le déplacement de la trémie au-dessus du lit de matière, la quantité, ou plus précisément, le débit de matière déposée est contrôlé de sorte à obtenir une couche de dépôt uniforme.

Toutefois, si ce dispositif permet de contrôler la quantité de matière déposée selon la direction de déplacement de la trémie (direction x sur cette figure), l'uniformité de la couche selon la direction y parallèle au plateau (125) et perpendiculaire à la direction de déplacement de la trémie, dépend des conditions de chute, par gravité, du matériau granulaire. L'effet égalisateur du racleur (245) dans cette même direction (y) est limité, celui-ci se déplaçant dans le même sens que la trémie.

De plus, dans le cas où une pièce comprenant des matières différentes selon l'axe zest réalisée, ce que permet le procédé de fabrication additive, il est nécessaire déposer des couches successives de matières différentes.

Lors de chaque changement de matière, il est alors nécessaire de procéder à un nettoyage complet de la trémie pour en éliminer la matière précédemment déposée et qui s'est logée notamment dans des interstices autour du cylindre doseur (250). Ces opérations de nettoyage sont laborieuses et allongent le temps de réalisation de la pièce.

L'écoulement d'un matériau granulaire dans une trémie dépend entre autres :
- de la nature du matériau et de sa granulométrie ;
- du coefficient de frottement dudit matériau sur les parois internes de la trémie ;
- de la surface de l'ouverture en fond de trémie ;
- de l'angle du cône en fond de trémie.

Tous ces paramètres interagissent entre eux pour définir le mode et le débit de déversement. Globalement, les conditions de déversement sont d'autant plus favorables que la trémie est haute et étroite et que l'angle au sommet du cône de déversement est faible. De plus, plus l'ouverture en fond de trémie présente une faible surface, un faible diamètre par exemple, et plus l'angle au sommet du cône doit être réduit pour assurer un écoulement uniforme de la matière.

Conçue selon ces principes, une trémie adaptée au dépôt d'une couche de matériau granulaire dans un procédé de fabrication additive présentera un encombrement vertical important, avec les conséquences que cela implique en termes de conception de machine.

De plus, si les principes généraux de conception d'une trémie de déversement sont relativement documentés dans le cas des trémies destinées à déverser de très gros volumes de matières, en pratique des dizaines de m³, par exemple selon des équations décrites notamment par Jenike A. W. « Storage and flow of solids » Bulletin # 123 of the Utah Engineering Experiment Station - mars 1970*.*

Dans le cas d'une trémie destinée à déverser de la matière granuleuse pour constituer une couche de fabrication additive, le volume de matière déposé pour la réalisation d'une couche est de l'ordre d'une centaine de cm³.

Ainsi en regard des trémies de déversement industrielles utilisées pour le transbordement de produits pulvérulents, l'application visée par l'invention se situe dans un facteur d'échelle de l'ordre de 10⁻⁵ à 10⁻⁶ en termes de volumes et de débits.

### Exposé de l'invention

L'invention vise à résoudre les inconvénients de l'art antérieur et concerne à cette fin un dispositif pour la dépose d'une couche de matériau granulaire sur une surface de dépose, lequel dispositif comprenant :
- une trémie de déversement ;
- un racleur ;
- des moyens pour déplacer la trémie de déversement et le racleur relativement à la surface de dépose ;
et dans lequel la trémie comprend :
- une pluralité d'orifices de déversement alignés selon une direction transversale ;
- une partie supérieure et une partie inférieure conique de déversement, la partie inférieure comprenant deux parois transversales inclinées vers les orifices de déversement ;
- une compartimentation transversale de la partie de déversement, chaque compartiment comprenant deux parois perpendiculaires aux parois transversales de la partie conique de déversement et inclinées vers l'orifice de déversement de sorte à former en regard de chaque orifice de déversement un conduit pyramidal dans la partie inférieure de déversement, les parois consécutives de deux compartiments étant jointes en coin à leur rencontre dans la partie inférieure de déversement.

Ainsi, le matériau granulaire initialement chargé dans la trémie de déversement se déverse par chaque orifice à travers une trémie spécifique à cet orifice selon un débit défini par les caractéristiques de cette trémie spécifique, formant sur la surface de dépose un tas s'étendant en bande selon la direction de déplacement de la trémie sur une hauteur uniforme définie par ladite vitesse de déplacement.

La matière ainsi déposée est uniformisée en épaisseur par le racleur de sorte à former une couche adaptée à l'opération de fabrication additive subséquente.

Les bandes de matière ainsi déposées étant rapprochées, elles sont facilement égalisées et réparties sur la surface de dépose lors du déplacement du racleur. Aucun dispositif de dosage mobile n'est présent dans la trémie, le raccordement en coin des parois de compartimentation, et l'inclinaison des parois, font qu'aucun résidu de matériau ne subsiste après le vidage de la trémie, de sorte que des matériaux différents sont déposables successivement sans nettoyage de la trémie.

L'invention est avantageusement mise en œuvre selon les modes de réalisation et les variantes exposés ci-après, lesquels sont à considérer individuellement ou selon toute combinaison techniquement opérante.

Avantageusement, l'angle d'inclinaison par rapport à la direction verticale des deux parois transversales inclinées de la partie inférieure, ainsi que des deux parois de compartimentation pour un même orifice, est inférieur ou égale à 40°.

Ces conditions permettent d'obtenir un déversement selon un écoulement de masse dans la trémie, et ainsi d'obtenir un débit de matière sensiblement constant dans chaque orifice au cours de la dépose.

Avantageusement, l'intérieur de la trémie comprend un revêtement dont le coefficient de frottement avec le matériau granulaire déposé est inférieur à 0,1.

Avantageusement, la trémie comprend un dispositif de vibration installé sur une paroi extérieure.

Ces deux caractéristiques prises seules ou en combinaison permettent de réduire le coefficient de frottement apparent entre le matériau granulaire et la trémie et ainsi d'utiliser des angles dans les parties de déversement, parois inférieures de la trémie et parois de compartimentation, plus ouverts, typiquement plus proches de 40°, tout en conservant un écoulement de masse du matériau. Ainsi l'encombrement vertical de la trémie est réduit.

Selon un mode de réalisation, les orifices de la trémie de déversement sont répartis selon un pas régulier le long de la direction transversale.

Selon un autre mode de réalisation, la trémie comprend trois orifices ou plus, répartis selon un pas non régulier le long de la direction transversale.

Selon encore un autre mode de réalisation, compatible avec les deux précédents, la trémie comprend un orifice ayant une section de sortie différente de celle d'un autre orifice.

Ces caractéristiques permettent de moduler la quantité de matière déposée par la trémie selon la direction transversale, et ainsi d'adapter la dépose de matière, par exemple dans le cas d'une trajectoire circulaire de la trémie sur la surface de dépose, par exemple dans le cas d'une machine à cinématique cylindrique.

Avantageusement, le racleur du dispositif objet de l'invention comprend des reliefs en vis-à-vis de chaque orifice de la trémie. Ainsi, l'égalisation de la couche déposée est facilitée.

L'invention concerne également un procédé pour la dépose d'une couche de matériau granulaire sur une surface de dépose mettant en œuvre le dispositif objet de l'invention selon l'un quelconque de ses modes de réalisation et comprenant les étapes consistant à :
i. remplir la trémie de déversement d'un premier matériau granulaire ;
ii. déplacer la trémie de déversement au-dessus de la surface de dépose selon une trajectoire définie parcourue à une vitesse définie ;
iii. déposer lors de l'étape ii) la matière en bandes de dépose continues et parallèles sur la surface de dépose ;
iv. étaler au moyen d'un racleur la matière déposée à l'étape iii) sur la surface de dépose de sorte à obtenir une couche d'épaisseur uniforme.

Avantageusement, le procédé objet de l'invention comprend après l'étape iv) les étapes consistant à :
v. remplir la trémie d'un deuxième matériau granulaire différent du premier ;
vi. reprendre les étapes ii) à iv) avec le deuxième matériau granulaire.

Ainsi, le procédé objet de l'invention permet de réaliser des pièces comprenant des variations de constitution selon le sens de la stratification.

### Description sommaire des dessins

L'invention est exposée ci-après selon ses modes de réalisation préférés, nullement limitatifs, et en référence aux figures 1 à 8, dans lesquelles :
Fig.1, Fig.2
   [fig.1] et [fig.2], relatives à l'art antérieur, montrent des variantes de mise en œuvre d'un procédé de fabrication additive par agglomération sélective dans un lit de matière ;
Fig. 3

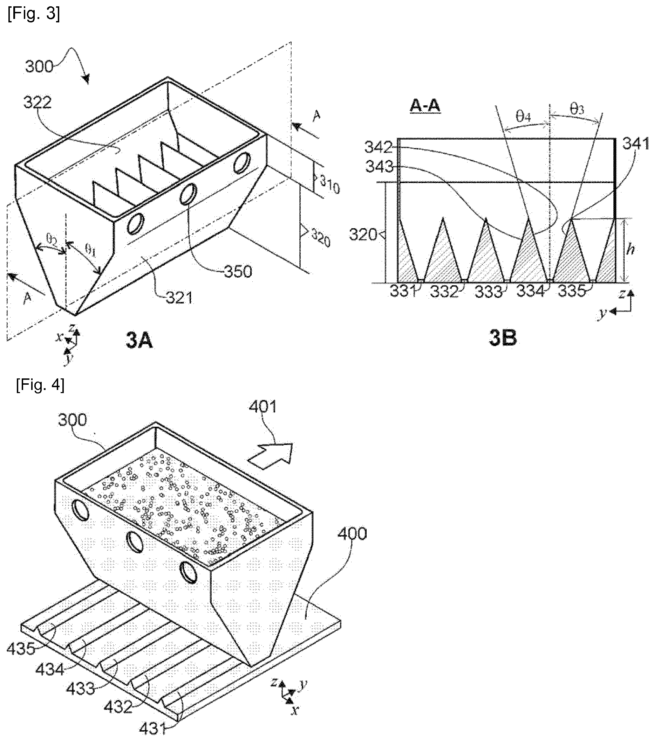

   [fig. 3] représente, selon une vue en perspective, figure 3A, et figure 3B selon une vue en coupe AA définie figure 3A, un exemple de réalisation de la trémie de dépose du dispositif objet de l'invention ;
Fig. 4
   [fig. 4] illustre selon une vue en perspective, un exemple de dépose d'une couche de matière sur une surface de dépose, au moyen du dispositif objet de l'invention ;
Fig. 5

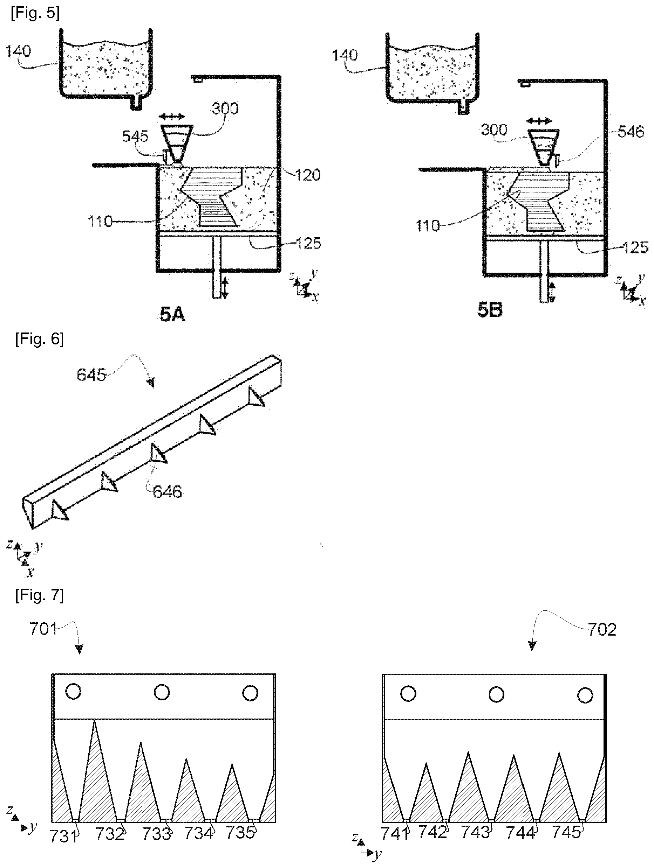

   [fig. 5] montre schématiquement un exemple de dépose avec le système objet de l'invention, figure 5A avec un racleur placé derrière la trémie et figure 5B avec un racleur placé devant la trémie ;
Fig. 6
   [fig. 6] représente selon une vue en perspective un exemple de réalisation d'un racleur pour le dispositif objet de l'invention ;
Fig. 7
   [fig. 7] représente figures 7A et 7B selon des vues en coupe, des exemples de réalisation de la compartimentation de la trémie du dispositif objet de l'invention ;
Fig. 8

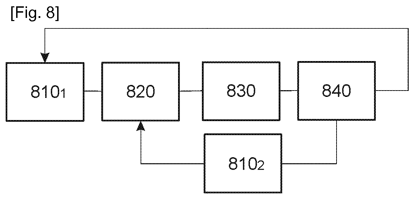

   [fig. 8] est un organigramme d'un exemple de réalisation du procédé objet de l'invention.

### Meilleure manière de réaliser l'invention

Figure 3A, selon un exemple de réalisation, la trémie (300) du dispositif objet de l'invention est globalement en forme de coin, et comprend une partie supérieure (310) et une partie inférieure (320) dite de déversement, comprenant deux parois inclinées (321, 322) convergeant vers les ouvertures inférieures de la trémie, ouvertures réparties selon une direction transversale (y).

La trémie (300) comprend dans sa partie supérieure des moyens pour la fixer dans une machine de fabrication additive, notamment par boulonnage et notamment à un chariot dont la vitesse de déplacement est contrôlée.

Selon cet exemple de réalisation, les deux parois (321, 322) inclinées de la partie inférieure (320) de la trémie sont inclinées symétriquement en regard d'un plan vertical transversal (*x*, *y*), d'un angle *θ₁* = *θ₂.*

Alternativement, les deux parois sont inclinées selon des angles (*θ₁, θ₂*) différents par rapport au plan vertical transversal. L'angle d'inclinaison (*θ₁, θ₂*) d'une paroi étant compté entre 0°, pour une paroi verticale, et 90° pour une paroi horizontale, quelle que soit la paroi, ces angles (*θ₁*, *θ₂*) sont dans tous les cas inférieurs à 40° et préférentiellement inférieurs à 30°, de sorte que l'angle du cône de déversement (*θ₁+ θ₂*) entre les deux parois (321, 322) transversales inclinées de la partie inférieure, est au plus égal à 80° et préférentiellement inférieur à 60°.

Figure 3B, la trémie est compartimentée dans sa partie inférieure (320).

Chaque compartiment correspond à un orifice (331, 332, 333, 334, 335), la trémie comprenant plusieurs orifices alignés selon la direction transversale (*y*). Chaque compartiment constitue une trémie conique de section rectangulaire évolutive dans la partie de déversement (320) de la trémie du dispositif objet de l'invention.

Cette « sous-trémie » en regard de chaque orifice est délimitée selon la direction longitudinale (*x*) par les parois inclinées (321, 322) de la trémie (300) et selon la direction transversale (*y*) par des parois de compartimentation (341, 342) inclinées par rapport à un plan vertical longitudinal (*x*, *z*) et convergeant vers un orifice.

Chaque paroi de compartimentation est inclinée d'un angle (*θ₃, θ*₄) inférieur à 40°, préférentiellement inférieur à 30°, de sorte que l'angle d'ouverture (*θ₃ + θ*₄) entre deux parois de compartimentation débouchant sur un orifice, est au plus égal à 80° et préférentiellement inférieur à 60°.

Le conduit ainsi créé entre les parois inclinées et les parois de compartimentation jusqu'à la sortie de l'orifice, ne comprend aucune surface inclinée d'un angle supérieur à 40° par rapport à la direction verticale. Ces conditions assurent un écoulement fluide du matériau granulaire contenu dans la trémie (300), sous la forme d'un écoulement de masse, vers chacun des orifices (331, 332, 333, 334, 335) de la trémie (300).

La géométrie des compartiments amenant le matériau vers les orifices est telle que la section effective d'écoulement à travers un orifice est égale ou sensiblement égale à la section de l'orifice pendant la quasi-totalité du temps de vidage de la trémie (300).

La section effective est la section d'écoulement du matériau au travers l'orifice. Cette section effective ne peut être qu'inférieure ou égale à la section de l'orifice.

Dans le cas de la trémie du dispositif objet de l'invention, cette section effective, pour chaque orifice, est égale à la section dudit orifice, depuis le remplissage de la trémie (300) et le début du déversement du matériau granulaire et tant que le niveau de matériau granulaire contenu dans un compartiment est suffisant pour assurer cette condition.

En toute fin de vidage, la section effective de déversement est éventuellement inférieure à la section de l'orifice, mais il s'agit là d'un effet marginal.

Ces conditions permettent d'obtenir un débit de déversement quasi constant à travers chacun des orifices, ce débit étant fixé par la nature du matériau déversé, notamment sa masse volumique et sa granulométrie et la géométrie de la trémie, c'est-à-dire, sans le recours à des moyens spécifiques de contrôle du débit de déversement, tels qu'un tambour à encoches.

Les parois de compartimentation contiguës (342, 343) de deux compartiments successifs sont connectées entre elles, dans la partie inférieure (320) de la trémie, par un raccordement vif, lesdites parois ainsi raccordées formant une dent ou un coin, avec un angle de pointe inférieur à 60°, préférentiellement inférieur à 40°, selon l'inclinaison respective des surfaces (342, 343) ainsi raccordées.

Cette caractéristique assure une séparation facile des flux d'écoulement vers les orifices multiples de la trémie, et l'absence de résidus de matériau dans la trémie à l'issue de son vidage.

À titre d'exemple informatif et non limitatif, la trémie du dispositif objet de l'invention comprend des orifices carrés de 2 mm de côté, espacés selon un pas de 15 mm à 20 mm, la trémie a une hauteur totale de 40 mm, la hauteur h des séparations, ou hauteur des dents, par rapport au fond de la trémie est comprise entre 10 et 20 mm.

Une telle trémie est adaptée pour le dépôt d'une couche de matériau granulaire selon une épaisseur uniforme comprise entre 0,3 mm et 0,8 mm, sur la largeur de la trémie et selon une course de 500 mm, pour des matériaux granulaires tels que du sable de silice, de l'aluminium ou de l'acier inoxydable dont la granulométrie *D* est comprise entre 20 µm et 200 µm.

Selon cet exemple, l'ouverture d'un orifice est au moins égale à 10 fois la granulométrie du matériau déposé, mais il est possible d'utiliser des ouvertures plus réduites, tout en conservant un écoulement de masse, la limite inférieure de l'ouverture possible étant supérieure à 2 fois la granulométrie du matériau déversé. Ces dimensions montrent que bien que le terme « trémie » soit utilisé, la trémie du dispositif objet de l'invention appartient à un domaine technique différent de celui des trémies industrielles et s'apparente plus à une buse multijet de dépose d'un matériau granulaire.

Figure 4, l'opération de dépôt de matière sur une surface de dépose (400) au moyen de la trémie du dispositif objet de l'invention est représentée sans le racleur.

L'épaisseur finale, après raclage, de la couche de matière déposée est fonction des dimensions de la pièce, du procédé de fabrication additive mis en œuvre et de la finition visée.

À titre d'exemples non limitatifs, pour des pièces contenues dans un volume inférieur ou égal à 500 cm³, l'épaisseur des couches déposées est comprise entre 0,3 mm et 1 mm.

Pour des pièces contenues dans un volume de l'ordre de 1 m³ ou plus, les épaisseurs des couches déposées sont supérieures à 2 mm.

Pour une trémie de caractéristiques données, l'épaisseur de la couche déposée dépend de la vitesse de déplacement relative de la trémie par rapport à la surface de dépose, cette épaisseur est d'autant plus élevée que la vitesse de dépose est réduite.

La quantité de matière déposée dépend du débit de matière délivré par la trémie, celui-ci est d'autant plus important que l'ouverture de l'orifice de déversement est importante.

Selon cet exemple de mise en œuvre, la trémie (300) étant remplie du matériau granulaire à déposer, celle-ci est déplacée relativement à la surface de dépose, selon une vitesse constante (401).

Selon des exemples de mise en œuvre, ce déplacement est obtenu par le déplacement de la trémie ou par le déplacement du support sur lequel se trouve le lit de matière.

Au cours de ce déplacement, chaque orifice dépose un tas (431, 432, 433, 434, 435) selon une de bande de dépose sur la surface de dépose (400).

Lorsque le racleur est séparé de la trémie, cette opération produit des tas en bande comme le représente la figure 4. Lorsque le racleur est fixé à la trémie et se déplace avec elle, les tas sont cassés à mesure du déplacement de la trémie (300).

Le débit de déversement par chaque orifice étant constant du fait des caractéristiques géométriques de la trémie (300), ainsi que de la vitesse (401) de déplacement relative constante, la section de chaque tas est sensiblement constante dans la direction longitudinale (x), l'angle de talus des tas étant défini par le matériau déposé.

Pour la clarté de la figure, les tas (431, 432, 433, 434, 435) sont ici représentés avec un angle de talus élevé et relativement espacés les uns des autres. En pratique l'angle de talus est plus faible, généralement de l'ordre de 30° de sorte que l'angle au sommet des tas est de l'ordre de 120°, sans que cette valeur ne soit limitative.

Selon des variantes de mise en œuvre, la dépose est réalisée en une seule passe : la trémie est initialement remplie de la quantité de matière à déposer ou d'une quantité légèrement supérieure, et se vide au cours d'un seul parcours de long de la surface de dépose.

Alternativement la dépose est réalisée en deux passes : la trémie initialement remplie de la quantité de matière nécessaire ou d'une quantité légèrement supérieure, se vide lors d'un aller-retour au-dessus de la surface de dépose. Selon cette variante de mise œuvre, la trémie est optionnellement décalée latéralement relativement à la surface de dépose, par exemple d'un demi-pas d'espacement des orifices, lors de la passe retour, de sorte que le dépôt sur la surface soit réparti plus uniformément.

Selon encore une autre variante, des réservoirs de matière sont positionnés aux deux extrémités du parcours, et la trémie effectue une première course après s'être remplie auprès d'un premier réservoir de matière, puis une deuxième course en sens inverse après s'être remplie auprès du réservoir de matière à l'autre extrémité du lit de matière. Les deux courses sont concomitantes ou séparées par une opération de fabrication additive.

Figure 5, selon des exemples schématiques de mise en œuvre du dispositif objet de l'invention, la trémie (300) est fixée à un chariot (non représenté) de la machine, apte à se déplacer selon au moins une direction (*x*) relativement à la surface de dépose. La trémie (300) est orientée de sorte que les orifices soient alignés selon une direction (*y*) perpendiculaire à ce sens de déplacement principal.

Le lit de matière (120) est posé sur un plateau (125) déplaçable verticalement par des moyens appropriés.

Préalablement à la dépose d'une couche de matière, le plateau (125) est descendu d'une hauteur correspondant à l'épaisseur de la couche à déposer.

La trémie (300) est remplie de la quantité de matière appropriée depuis la réserve de matière (140). Selon un exemple de réalisation, la machine comprend plusieurs réserves de matières différentes, de sorte à permettre la dépose de matières différentes sur le lit de matière (120).

À titre d'exemple, ces différentes réserves de matière comprennent des matières de même nature mais de granulométries différentes, ou des matières de natures différentes, par exemple des métaux différents.

Figure 5A, selon cet exemple de réalisation un racleur (545) est lié à la trémie (300) à l'arrière de celle-ci dans le sens de son déplacement lors du déversement.

La partie inférieure du racleur est réglée à l'épaisseur de la couche déposée.

La trémie remplie de matière est déplacée à vitesse constante au-dessus de la surface de dépose, et le racleur égalise la couche de matière déposée à l'épaisseur désirée, à mesure de sa dépose.

Figure 5B, selon cet exemple de réalisation le racleur (546) est lié à la trémie (300) à l'avant de celle-ci dans le sens de son déplacement lors du déversement. Ainsi, la trémie remplie de matière est déplacée à vitesse constante au-dessus de la surface de dépose, puis la couche est égalisée par le racleur (546) lors du trajet retour de la trémie.

Selon un autre mode de réalisation (non représenté) deux racleurs sont fixés à la trémie, un à l'avant et l'autre à l'arrière, par exemple réglés à des hauteurs différentes, de sorte qu'une première égalisation de la couche est réalisée lors du trajet aller, et une égalisation de finition est réalisée lors du trajet retour de la trémie.

Selon un exemple de réalisation, le racleur est une simple règle de section parallélépipédique.

Figure 6, selon un autre exemple de réalisation, le racleur (645), représenté ici dans une configuration où il est placé à l'arrière de la trémie, ou l'un des deux racleurs si le dispositif en comporte deux, ou les deux, comprend des reliefs (646) en vis-à-vis de chaque orifice de la trémie, pour faciliter la répartition de la matière déposée.

Selon une autre variante (non représentée), le ou les racleurs ne sont pas fixés à la trémie mais comprennent leurs propres moyens de déplacement.

Dans ce cas le racleur entre en œuvre pendant la dépose, en suivant la trémie dans son déplacement aller ou retour, ou après la dépose complète de la matière sur la surface de dépose.

Les racleurs (645, 646) sont ici représentés dans leur mode de réalisation le plus simple, soit sous la forme générale de règles. Alternativement, lesdits racleurs sont des rouleaux dont l'axe de rotation est perpendiculaire au sens de déplacement de la trémie, et qui sont réglés pour appliquer une certaine pression de compactage sur la couche de matière déposée. Ainsi ce type de racleur permet à la fois de répartir la couche de matière déposée et de densifier cette couche.

Selon un exemple de réalisation, un racleur de type rouleau et un racleur de type règle sont associés à la trémie.

Figure 7, dans tous les exemples précédents les orifices de déversement de la trémie sont représentés répartis dans la direction transversale selon un pas régulier et avec la même section d'ouverture.

Figure 7A, selon un exemple de réalisation la trémie (701) du dispositif objet de l'invention comprend des orifices (731, 732, 733, 734, 735) d'ouvertures différentes, par exemple dont l'ouverture est croissante selon la direction transversale.

Cette configuration permet d'adapter le débit de matière déversée par chaque orifice en fonction de la position dudit orifice.

Par exemple, la trémie (701) telle que représentée est adaptée à la dépose de matière sur une surface de dépose selon une trajectoire circulaire, pour une utilisation au moyen d'un robot cylindrique.

Ainsi, lors de l'utilisation de la trémie, l'orifice (731) de plus petite ouverture suit une trajectoire circulaire plus poche du centre de courbure et par conséquent selon un plus petit rayon, alors que l'orifice de plus grande ouverture (735) suit une trajectoire plus éloignée du centre de courbure et de plus grand rayon.

La progressivité des ouvertures le long de la direction transversale ainsi que les caractéristiques géométriques des parois de compartimentation, permettent d'obtenir un débit de matière déposée plus important le long de la trajectoire de grand rayon et plus faible le long de la trajectoire de petit rayon.

Les caractéristiques géométriques des parois de compartimentation, plus particulièrement leur angle d'inclinaison sont déterminées par calcul et affinées par expérience, l'inclinaison de chaque paroi étant toujours inférieure à 40° par rapport à la verticale. Ainsi, l'angle d'ouverture entre deux parois de compartimentation convergeant vers un orifice est par exemple d'autant plus faible que l'ouverture de l'orifice est réduite.

Figure 7B, selon un autre exemple de réalisation, compatible avec le précédent, les orifices (741, 742, 743, 744, 745) de la trémie (702) sont répartis selon un pas irrégulier dans la direction transversale.

Selon cet exemple de réalisation, le pas entre les orifices augmente dans le sens y positif, mais l'inverse est tout aussi envisageable. Ici encore, les angles des parois de compartimentation sont ajustés, en restant inférieurs à 40° par rapport à la direction verticale, de sorte à obtenir un débit constant dans tous les orifices ou une progressivité de ce débit d'un orifice à l'autre.

Quel que soit le mode de réalisation ou une combinaison de ces modes de réalisation, le débit de matière au travers chaque orifice est défini :
- par les caractéristiques du matériau granulaire déposé, notamment son frottement interne (frottement entre les grains) ;
- la section d'ouverture de l'orifice ;
- l'angle d'inclinaison des parois convergeant vers l'orifice, tant pour les parois de compartimentation que pour les parois transversales de la partie inférieure de la trémie ;
- la hauteur de la séparation des flux aux raccordements entre les parois de compartimentation ;
- le frottement du matériau déposé sur les parois de la trémie.

Les influences de ces paramètres sont liées. Il est possible de définir des tendances, qui permettent de concevoir dans ses grandes lignes une trémie adaptée à un cas donné, puis d'affiner cette conception en fonction d'expériences.

Ainsi, l'écoulement visé est un écoulement de masse, c'est-à-dire que l'ensemble du matériau contenu dans la trémie ou dans un conduit entre deux parois de compartimentation, s'écoule en même temps à travers les différents orifices.

Plus la section d'ouverture d'un orifice est réduite et plus l'angle d'ouverture entre les parois de compartimentation doit être réduit. Plus la différence de débit visée entre deux orifices juxtaposés est importante, et plus la séparation des flux doit intervenir en amont dans l'écoulement. Finalement, les angles des parois doivent être inférieurs à 40° par rapport à la verticale et préférentiellement inférieurs à 30°.

De manière additionnelle, il est possible de réduire le frottement entre le matériau déversé et les parois de la trémie par un revêtement desdites parois avec un matériau à faible coefficient de frottement tel que du Téflon^{®}. Pour avoir un effet significatif sur les angles d'inclinaison admissibles des parois, le coefficient de frottement entre le revêtement et le matériau déversé par la trémie doit être inférieur à 0,1.

Selon un autre mode de mise en œuvre, ce coefficient de frottement apparent est réduit de manière active en soumettant une des parois de la trémie, par l'extérieur, à des vibrations. À cette fin un microvibrateur électrique est fixé sur une surface extérieure de la trémie par exemple sur une des parois transversales inclinées. Ce type de vibrateur comprend un moteur électrique entraînant au moins un volant en rotation, le volant comprenant des masselottes qui génèrent la vibration, selon une fréquence globalement comprise dans le spectre audible, typiquement comprise entre 25 Hz et 500 Hz selon le type de vibrateur.

Pour une trémie de petite dimension, cette fonction est par exemple réalisée par un ou plusieurs vibreurs miniatures tels que ceux utilisés dans les téléphones portables ou les manettes de jeu vidéo.

Pour une trémie adaptée à la réalisation de pièces de grandes dimensions contenues dans un volume d'un ou plusieurs m³, un vibrateur tel que distribué sous la marque OLI7 S.r.l. Via Canalazzo, 35 I - 41036 Medolla (MO) Italie, modèle Micro MVE, est adapté.

L'abaissement du coefficient de frottement apparent entre le produit et les parois de la trémie, que ce soit par revêtement, vibration ou les deux, a essentiellement pour effet de donner plus de souplesse dans la détermination des angles des parois en regard des ouvertures des orifices, en permettant d'utiliser des angles d'inclinaison s'approchant de 40°, mais qui dans tous les cas doivent rester inférieurs à cette valeur, tout en conservant un écoulement de masse.

De par les caractéristiques géométriques de la trémie du dispositif objet de l'invention, le matériau déversé sur la surface de dépose ne laisse aucun résidu dans la trémie.

Ainsi, il est possible de déposer deux couches de matières différentes, mais compatibles entre elles, dans un procédé de fabrication additive, sans procéder à un nettoyage de la trémie entre les deux opérations de dépose.

Figure 8, selon un exemple de procédé de mise en œuvre du dispositif objet de l'invention, ledit procédé comprend une première étape (810₁) de remplissage de la trémie. Ce remplissage est avantageusement réalisé dans une zone proche mais en dehors du lit de matière. La quantité de matière chargée dans la trémie est légèrement supérieure à la quantité de matière nécessaire pour la couche à déposer sur le lit de matière pour tenir compte de la quantité déversée en dehors du lit de matière.

Selon une étape de dépose (820) la trémie est déplacée à vitesse contrôlée relativement à la surface de dépose, où le déversement est réalisé selon une bande de dépose pour chaque orifice.

Selon une étape d'égalisation (830), les tas sont brisés et répartis sur la surface de dépose au moyen d'un racleur, de type règle ou rouleau.

Selon des variantes, le racleur est fixé à la trémie, de sorte que l'étape d'égalisation se déroule en même temps que la dépose, ou, le racleur est piloté séparément et l'étape d'égalisation est réalisée après la dépose.

La couche étant égalisée, la matière déposée est agglomérée sélectivement au cours d'une opération (840) de fabrication additive.

Selon une première possibilité, le cycle reprend avec un nouveau remplissage de la trémie et le dépôt d'une nouvelle couche de la même matière.

Alternativement, selon une étape (810₂) la trémie est remplie avec un autre matériau granulaire à l'issue de l'étape de fabrication additive. Les opérations subséquentes reprennent alors avec ce deuxième matériau granulaire.

La description ci-avant et les exemples de réalisation, montrent que l'invention atteint le but visé, et permet de déposer selon une couche uniforme d'un matériau granulaire sur une surface de dépose, et de changer facilement la nature du matériau déposé d'une couche à l'autre sans coûteuse opération de nettoyage des moyens de dépose. Le dispositif est simple et facilement adaptable sur nombre de machines existantes.

## Revendications

1. Dispositif pour la dépose d'une couche de matériau granulaire sur une surface de dépose (400), lequel dispositif comprend : une trémie de déversement (300, 701, 702) ; un racleur (545, 546, 645) ; des moyens pour déplacer la trémie de déversement et le racleur relativement à la surface de dépose (400) ; **caractérisé en ce que** la trémie comprend : une pluralité d'orifices (331...335, 731...735, 741...745) de déversement, alignés selon une direction transversale (y) ; une partie supérieure (310) et une partie inférieure (320) conique de déversement, la partie inférieure (320) comprenant deux parois transversales (321, 322) inclinées vers les orifices de déversement ; une compartimentation transversale de la partie de déversement, chaque compartiment comprenant deux parois (341, 342, 343) perpendiculaires aux parois transversales de la partie conique de déversement et inclinées vers l'orifice de déversement, de sorte à former en regard de chaque orifice de déversement un conduit pyramidal dans la partie inférieure de déversement, les parois consécutives (342, 343) de deux compartiments étant jointes en coin à leur rencontre dans la partie inférieure de déversement.

2. Dispositif selon la revendication 1, dans lequel l'angle d'inclinaison (*θ₁*, *θ₂, θ₃, θ₄*) par rapport à la direction verticale (z) des deux parois transversales (321, 322) inclinées de la partie inférieure, ainsi que des deux parois (341, 342) de compartimentation pour un même orifice, est inférieur ou égale à 40°.

3. Dispositif selon la revendication 1, dans lequel l'intérieur de la trémie comprend un revêtement dont le coefficient de frottement avec le matériau granulaire déposé est inférieur à 0,1.

4. Dispositif selon la revendication 1, dans lequel la trémie comprend un dispositif de vibration installé sur une paroi extérieure.

5. Dispositif selon la revendication 1, dans lequel les orifices (731...735) de la trémie de déversement sont répartis selon un pas régulier le long de la direction transversale.

6. Dispositif selon la revendication 1, dans lequel la trémie (702) comprend trois orifices (741, 742, 743, 744, 745) ou plus, répartis selon un pas non régulier le long de la direction transversale.

7. Dispositif selon la revendication 1, dans lequel la trémie (701) comprend un orifice (731) ayant une section de sortie différente de celle d'un autre orifice (735).

8. Dispositif selon la revendication 1, dans lequel le racleur (545, 546, 645) est fixé à la trémie de déversement.

9. Dispositif selon la revendication 1, dans lequel le racleur (645) comprend des reliefs (646) en vis-à-vis de chaque orifice de la trémie (300, 701, 702).

10. Procédé pour la dépose d'une couche de matériau granulaire sur une surface de dépose mettant en œuvre un dispositif selon la revendication 1 et comprenant les étapes consistant à : (i) remplir (810₁) la trémie (300, 701, 702) de déversement d' un premier matériau granulaire ; (ii) déplacer (820) la trémie de déversement au-dessus de la surface de dépose (400) selon une trajectoire définie parcourue à une vitesse (401) définie ; (iii) déposer lors de l'étape ii) la matière (431...435) des bandes de dépose continues et parallèles sur la surface de dépose (400) ; (iv) étaler (830) au moyen d'un racleur la matière déposée à l'étape iii) sur la surface de dépose de sorte à obtenir une couche d'épaisseur uniforme ; (v) remplir (810₂) la trémie d'un deuxième matériau granulaire différent du premier ; (vi) reprendre les étapes ii) à iv) avec le deuxième matériau granulaire.

## Patentansprüche

1. Vorrichtung zum Ablagern einer Schicht aus körnigem Material auf einer Ablagefläche (400), wobei die Vorrichtung Folgendes umfasst: einen Ausgießtrichter (300, 701, 702); einen Abstreifer (545, 546, 645); Mittel zum Bewegen des Ausgießtrichters und des Abstreifers relativ zur Ablagefläche (400); **dadurch gekennzeichnet, dass** der Trichter Folgendes umfasst: eine Vielzahl von Ausgießöffnungen (331 ...335, 731 ...735, 741 ...745), die in Querrichtung (y) ausgerichtet sind; einen kegelförmigen Ausgießoberteil (310) und einen kegelförmigen Ausgießunterteil (320), wobei der Unterteil (320) zwei zu den Ausgießöffnungen geneigte Querwände (321, 322) umfasst; eine Querabtrennung des Ausgießteils, wobei jede Abtrennung zwei Wände (341, 342, 343) umfasst, die senkrecht zu den Querwänden des kegelförmigen Ausgießteils stehen und zu der Ausgießöffnung geneigt sind, sodass gegenüber jeder Ausgießöffnung ein pyramidenförmiger Kanal in dem unteren Ausgießteil gebildet wird, wobei die aufeinanderfolgenden Wände (342, 343) von zwei Abtrennungen in dem unteren Ausgießteil in einer Keilverbindung zueinander stehen.

2. Vorrichtung nach Anspruch 1, wobei der Neigungswinkel (*θ₁, θ₂, θ₃, θ₄*) der beiden geneigten Querwände (321, 322) des Unterteils sowie der beiden Abtrennungswände (341, 342) für eine gleiche Öffnung bezogen auf die vertikale Richtung (z) kleiner oder gleich 40° ist.

3. Vorrichtung nach Anspruch 1, wobei das Innere des Trichters eine Beschichtung umfasst, deren Reibungskoeffizient mit dem abgelagerten körnigen Material kleiner als 0,1 ist.

4. Vorrichtung nach Anspruch 1, wobei der Trichter eine an einer Außenwand installierte Vibrationsvorrichtung umfasst.

5. Vorrichtung nach Anspruch 1, wobei die Öffnungen (731 ...735) des Ausgießtrichters in einem gleichmäßigen Schritt entlang der Querrichtung verteilt sind.

6. Vorrichtung nach Anspruch 1, wobei der Trichter (702) drei oder mehr Öffnungen (741, 742, 743, 744, 745) umfasst, die in einem unregelmäßigen Abstand entlang der Querrichtung verteilt sind.

7. Vorrichtung nach Anspruch 1, wobei der Trichter (701) eine Öffnung (731) mit einem anderen Austrittsquerschnitt als eine andere Öffnung (735) umfasst.

8. Vorrichtung nach Anspruch 1, wobei der Abstreifer (545, 546, 645) an dem Ausgießtrichter befestigt ist.

9. Vorrichtung nach Anspruch 1, wobei der Abstreifer (645) gegenüber jeder Öffnung des Trichters (300, 701, 702) Erhebungen (646) umfasst.

10. Verfahren zum Ablagern einer Schicht aus körnigem Material auf einer Ablagefläche, das eine Vorrichtung nach Anspruch 1 einsetzt und die Schritte umfasst, die aus Folgendem bestehen: (i) Befüllen (810₁) des Ausgießtrichters (300, 701, 702) eines ersten körnigen Materials; (ii) Bewegen (820) des Ausgießtrichters über die Ablagefläche (400) in einer definierten Bahn, die mit einer definierten Geschwindigkeit (401) zurückgelegt wird; (iii) Ablagern in Schritt ii) des Materials (431 ...435) der durchgehenden und parallelen Ablagebänder auf die Ablagefläche (400); (iv) Verteilen des in Schritt iii) abgetragenen Materials mit einem Schaber (830) auf der Ablagefläche, sodass eine Schicht mit gleichmäßiger Dicke erreicht wird; (v) Befüllen (810₂) des Trichters mit einem zweiten körnigen Material, das sich von dem ersten unterscheidet; (vi) Wiederholen der Schritte ii) bis iv) mit dem zweiten körnigen Material.

## Claims

1. A device for depositing a layer of granular material on a depositing surface (400), which device comprises: a discharge hopper (300, 701, 702); a scraper (545, 546, 645); means for moving the discharge hopper and the scraper relative to the depositing surface (400); **characterised in that** the hopper comprises: a plurality of discharge orifices (331...335, 731...735, 741...745), aligned in a transverse direction (y); an upper portion (310) and a conical lower portion (320) for discharge, the lower portion (320) comprising two transverse walls (321, 322) inclined toward the discharge orifices; a transverse compartmentalisation of the discharge portion, each compartment comprising two walls (341, 342, 343) perpendicular to the transverse walls of the conical discharge portion and inclined towards the discharge orifice, so as to form a pyramidal conduit facing each discharge orifice in the lower discharge portion, the consecutive walls (342, 343) of two compartments being joined at a corner where they meet in the lower discharge portion.

2. Device according to claim 1, wherein the angle of inclination (*θ₁, θ₂, θ₃, θ₄* ) with respect to the vertical direction (*z* ) of the two inclined transverse walls (321, 322) of the lower part, as well as the two compartmentalisation walls (341, 342) for one and the same orifice, is less than or equal to 40°.

3. Device according to claim 1, wherein the inside of the hopper comprises a coating whose coefficient of friction with the deposited granular material is less than 0.1.

4. Device according to claim 1, wherein the hopper comprises a vibration device installed on an outer wall.

5. Device according to claim 1, wherein the orifices (731...735) of the discharge hopper are distributed in an even pitch along the transverse direction.

6. Device according to claim 1, wherein the hopper (702) comprises three or more orifices (741, 742, 743, 744, 745), distributed in an irregular pitch along the transverse direction.

7. Device according to claim 1, wherein the hopper (701) comprises an orifice (731) having an outlet cross-section different from that of another orifice (735).

8. Device according to claim 1, wherein the scraper (545, 546, 645) is attached to the discharge hopper.

9. Device according to claim 1, wherein the scraper (645) comprises reliefs (646) facing each orifice of the hopper (300, 701, 702).

10. Method for depositing a layer of granular material on a depositing surface using a device according to claim 1 and comprising the steps consisting of: (i) filling (810₁ ) the hopper (300, 701, 702) for discharge a first granular material; (ii) moving (820) the discharge hopper above the depositing surface (400) along a defined path travelled at a defined speed (401); (iii) depositing in step ii) the material (431...435) of the continuous and parallel depositing strips on the depositing surface (400); (iv) spreading (830) by means of a scraper the material deposited in step iii) on the depositing surface so as to obtain a layer of uniform thickness; (v) filling (810₂ ) the hopper with a second granular material different from the first; (vi) repeating steps ii) to iv) with the second granular material.
